# DEMANDE DE BREVET EUROPEEN

(11) **EP 2 246 460 A1**
(43) Date de publication de la demande: **03.11.2010**
(21) Numéro de dépôt: 09158977.0
(22) Date de dépôt: 28.04.2009
(51) Int. Cl.: C25D 17/00, C25D 17/06

(54) **Installation de traitement de surface de pièces**

(71) Demandeur: Golden Eagle Trading Ltd, Port Louis (MU)
(72) Inventeur: Vacheron, Frédéric, 74290 Menthon Saint Bernard (FR)
(74) Mandataire: Bugnion Genève

(57) **Abrégé**

Une machine de traitement de surfaces de pièces métalliques par immersion dans au moins un liquide de traitement contenu dans une cuve de traitement, comprenant une pluralité de cuves (101, 102, 103) agencées en série et un dispositif de transfert de pièces entre les cuves, lesdites cuves comprenant chacune une structure rotative (801, 802, 803) montée sur un axe de rotation (810, 820, 830), pouvant accueillir lesdites pièces, immergées par un mouvement de rotation des structures rotatives de telle sorte que les bulles d'air créées par l'immersion des pièces sont chassées de leurs surfaces, machine dans laquelle lesdits axes de rotation sont solidaires en rotation et entraînés par un dispositif d'entraînement commun. Les cuves agencées en série peuvent être contiguës et les axes de rotation des structures rotatives alignés et assemblés de façon à former un axe de rotation commun traversant l'ensemble de la machine. L'axe de rotation (810) de la cuve de traitement est isolé électriquement des autres parties d'axe (820, 830) et connecté à un générateur électrique, en particulier au moyen d'un connecteur tournant (806) agencé à une extrémité de l'axe. La cuve aval de la série est une cuve d'étuvage alimentée (112) en air chaud. La machine est logée dans un caisson comprenant des moyens de confinement et de retraitement de l'ensemble des fluides émanant de la machine.

## Description

La présente invention concerne le domaine des traitements de surface de pièces par immersion de ces pièces dans des liquides successifs contenus dans plusieurs cuves de traitement et transferts des pièces entre ces cuves, tels que les traitements électrochimiques de surfaces de pièces métalliques, et plus particulièrement les traitements par anodisation de pièces en aluminium. On peut citer, à titre d'exemples de tels traitements électrochimiques, l'anodisation barrière ou passivation anodique, l'anodisation poreuse en milieu acide, la dissolution anodique, le polissage électrolytique, l'anodisation dure ou auto-colorée. Les liquides de traitement peuvent comprendre non seulement des électrolytes, mais également des liquides de prè-traitement, tels que des liquides de dégraissage, des liquides de coloration et des liquides de rinçage.

La présente invention concerne plus particulièrement une installation de traitement de surface de pièces en continu par immersion desdites pièces dans au moins un liquide de traitement contenu dans une cuve de traitement, ladite installation comprenant une pluralité de cuves agencées en série et un dispositif de transfert des pièces entre les cuves, lesdites cuves comprenant chacune une structure rotative montée sur un axe de rotation et pouvant accueillir lesdites pièces, lesdites pièces étant immergées dans le dit liquide de traitement par un mouvement de rotation de la structure rotative de la cuve de traitement, choisi de telle sorte que les bulles d'air susceptibles d'être créées par l'immersion des dites pièces sont chassées des surfaces desdites pièces.

Les installations de traitement de surface de pièces en aluminium les plus répandues fonctionnent en batch, c'est-à-dire par charges de grand volume. Le document DE 2 119 401 décrit un exemple d'une telle installation, comprenant des chariots motorisés effectuant un parcours au-dessus de plusieurs bacs de traitement. Les chariots sont munis de bras mobiles effectuant des mouvements verticaux de grande ampleur pour plonger des charges importantes d'objets à traiter, suspendues au chariot mobile, dans les bacs successifs et les en ressortir. Ce type d'installation présente plusieurs inconvénients :
- lorsque les pièces à traiter sont creuses, des bulles ou poches d'air peuvent apparaître sur certaines parties de leur surface lors de l'immersion dans le liquide de traitement, ce qui conduit à des inhomogénéités de traitement, et donc à des défauts de qualité des pièces ;
- les volumes des cuves sont importants, ce qui implique des quantités importantes d'effluents liquides polluants à retraiter avant rejet ;
- les mouvements verticaux des charges au-dessus des cuves, ainsi que l'importante surface ouverte de ces cuves, génèrent la production de vapeurs et de gouttelettes de produits actifs, notamment de vapeurs acides, dans l'atmosphère de l'unité de traitement, ce qui implique l'installation de systèmes d'aération et de filtration puissants et coûteux pour traiter ces effluents gazeux.

Il en résulte que de telles unités de traitement ne peuvent être installées qu'au sein d'une usine chimique spécialisée dans les traitements de surface, respectant des normes de sécurité environnementales sévères. Les pièces doivent donc être transportées depuis l'usine métallurgique, qui les a usinées, vers l'usine de traitement de surface, et de là vers le site de l'utilisateur, ce qui entraîne des coûts d'emballage et de transport importants.

Dans la demande de brevet WO 2006/084973, dont le contenu est incorporé ici par référence, le déposant a déjà décrit une installation de traitement de surface de pièces en continu constituées d'une pluralité de cuves de traitement, équipées chacune d'un tambour rotatif motorisé, dont l'axe de rotation est monté horizontalement de telle sorte que la majeure partie du tambour soit immergée dans un liquide de traitement contenu dans la cuve correspondante. Les pièces à traiter, surtout si elles sont de petite taille, peuvent être préalablement mises en place par lots sur des supports sous forme de cassettes, par exemple celles décrites dans la demande de brevet EP-A-1 433 537 du déposant, puis lesdites cassettes sont transportées par un système de convoyage destiné à alimenter chaque cuve en pièces à traiter et à transporter plus en aval les pièces déjà traitées. Le système de convoyage comprend deux chaînes de convoyage parallèles, agencées de part et d'autre de la partie supérieure des cuves, les axes des tambours rotatifs étant perpendiculaires aux deux chaînes de convoyage. Chaque cuve est équipée d'un dispositif qui transfère les cassettes, les unes après les autres, au moyen d'un vérin hydraulique, par une poussée horizontale perpendiculaire aux axes des chaînes de convoyage, alternativement d'une chaîne de convoyage à l'autre, après avoir passé dans la cuve, où elles sont fixées temporairement sur des glissières agencées à la périphérie du tambour rotatif et où elles subissent une ou plusieurs rotations dans le liquide de traitement. Chaque tambour rotatif est entraîné par une roue dentée de l'arbre de son moteur, qui engrène avec la périphérie d'un flasque denté ou avec une succession de piges montées entre deux flasques, ces flasques constituant une face terminale du tambour. Le point d'engrenage est situé au-dessus du niveau du liquide contenu dans la cuve. C'est également via ces flasques que les tambours sont alimentés en courant électrique, au moyen de patins de contact glissants en appui contre les flasques, agencés dans la cuve au-dessus du niveau du liquide de traitement, tels que ceux décrits dans la demande de brevet du déposant WO 2007/122471. Le courant est alors transmis par le tambour aux supports de pièces, et de là aux pièces à traiter.

Les rotations des pièces dans les liquides de traitement éliminent les bulles ou poches d'air de la surface des pièces et permettent d'obtenir une excellente qualité de surface. L'élimination des déplacements verticaux de grande ampleur de pièces au-dessus des cuves réduit l'encombrement global de l'installation et la genèse de gouttelettes et vapeurs, et permet donc de diminuer la puissance des systèmes de filtration d'air de l'unité de traitement. Toutefois, comme chaque cuve constitue une sous-unité de traitement autonome avec son tambour motorisé et son dispositif de transfert cette installation met en oeuvre un système de convoyage et de transferts relativement complexe, qui demande une excellente synchronisation de ses composantes. Elle nécessite un dispositif d'entraînement pour chaque chaîne de convoyage et plusieurs dispositifs de transfert entre les chaînes et les cuves, dispositifs dont le coût est non négligeable.

Dans la demande de brevet WO 2008/035199, dont le contenu est incorporé ici par référence, le déposant a décrit une installation de traitement de surface de pièces en continu du type défini d'entrée, constituée de cuves comprenant des tambours rotatifs motorisés similaires à ceux décrits dans WO 2006/084973 et d'une chaîne de convoyage unique, destinée à alimenter chaque cuve en pièces à traiter, à en retirer les pièces déjà traitées et à les transférer vers la station de traitement suivante. Le convoyage des pièces s'effectue horizontalement et parallèlement aux axes des tambours. La chaîne de convoyage comprend des glissières de transfert horizontales agencées entre les cuves, avec lesquelles viennent s'aligner les glissières des tambours rotatifs lorsque celles-ci arrivent dans leur position la plus haute, qui émerge du liquide de traitement. Des chariots motorisés agencés au dessus de ces glissières effectuent des déplacements de va-et-vient sur un de rail de guidage parallèle audits axes. Chaque chariot est muni d'un système articulé de biellettes et de bras verticaux permettant de pousser les cassettes qui se trouvent en position haute et de les entraîner à chaque cycle de va-et-vient le long des glissières des tambours et des glissières de transfert. Dans cette installation, il est prévu de réaliser un rinçage des pièces par aspersion lorsque celles-ci sont positionnées sur une glissière de transfert entre deux cuves et/ou après la dernière cuve.

Cette installation présente les mêmes avantages que celle décrite dans WO 2006/084973 tout en simplifiant la construction du système de convoyage. Toutefois elle met en oeuvre autant de moteurs d'entraînement de tambours et au moins autant de chariots articulés qu'il y a de cuves, dispositifs dont le coût est non négligeable ; elle demande également une excellente synchronisation des composantes, tous les déplacements s'effectuant de manière cadencée.

On peut observer que dans les deux installations mentionnées ci-dessus, les patins de contact électrique, en graphite, constituent des pièces d'usure à l'intérieur même de la cuve de traitement électrolytique, et que les zones de contacts d'un flasque de tambour avec l'alimentation électrique et avec l'entraînement mécanique sont exposées aux liquides de traitement, dont certains sont des liquides corrosifs.

Dans les deux installations de traitement en continu décrites ci-dessus, après le dernier rinçage, la chaîne de convoyage entraîne les pièces traitées vers un tunnel de séchage agencé en aval de ces installations. L'air sortant du tunnel de séchage est repris par le système de filtration d'air de l'usine de traitement de surface.

Un premier but de la présente invention est d'offrir une installation du type défini d'entrée dans laquelle la synchronisation des déplacements des pièces puisse être réalisée plus facilement.

Un deuxième but de la présente invention est d'offrir une installation dans laquelle la mise sous tension électrique des pièces à traiter soit réalisée de manière simple et fiable.

Un troisième but de la présente invention et d'offrir une installation, en particulier une installation d'anodisation de pièces en aluminium, qui puisse être mise en oeuvre au sein d'une usine de formage de pièces métalliques ne disposant pas des équipements de traitement d'effluents aux normes exigées pour une usine de traitements électrochimiques.

À cet effet, un premier objet de l'invention est une machine de traitement de surfaces de pièces métalliques par immersion desdites pièces dans au moins un liquide de traitement contenu dans une cuve de traitement, ladite machine comprenant une pluralité de cuves agencées en série et un dispositif de transfert des pièces entre les cuves, lesdites cuves comprenant chacune une structure rotative montée sur un axe de rotation et pouvant accueillir lesdites pièces, lesdites pièces étant immergées dans le dit liquide de traitement par un mouvement de rotation de la structure rotative de la cuve de traitement, choisi de telle sorte que les bulles d'air susceptibles d'être créées par l'immersion des dites pièces sont chassées des surfaces desdites pièces, machine dans laquelle les axes de rotation des dites structures rotatives de la série de cuves sont solidaires en rotation et entraînés par un dispositif d'entraînement commun.

L'accouplement en rotation des axes des structures rotatives et leur entraînement par un seul dispositif d'entraînement élimine les difficultés d'une synchronisation des mouvements des structures rotatives.

L'invention a également pour objet une installation de traitement de surfaces de pièces métalliques comprenant une machine présentant les caractéristiques mentionnées ci-dessus, logée dans un caisson comprenant des moyens de confinement et de retraitement des fluides émanant de ladite machine, à l'intérieur du dit caisson.

De la sorte, le caisson constitue une unité de traitement pouvant être installé et mis en oeuvre dans une usine non spécialisée dans les traitements de surface.

Dans la machine selon l'invention, les cuves en série peuvent être contiguës. Les axes de rotation des dites structures rotatives des cuves peuvent être alignés et assemblés de façon à former un axe de rotation commun traversant l'ensemble de la machine.

Dans la machine selon l'invention, le dispositif d'entraînement commun peut être réalisé grâce à un moteur électrique entraînant directement l'axe de rotation commun ou les segments d'axes rendus solidaires en rotation par accouplement. Ce moteur d'entraînement peut être agencé à une première extrémité de la série de cuves, en particulier à l'extrémité aval.

De préférence, la structure rotative de la cuve de traitement destinée à réaliser une étape de traitement électrochimique est connectée à un générateur électrique par l'intermédiaire de l'axe de rotation de la cuve de traitement, et le dit axe de rotation de ladite cuve de traitement est isolé électriquement des autres segments d'axes de la machine. Selon un mode d'exécution, la connexion est réalisée au moyen d'un connecteur tournant monté sur le dit axe de rotation de la cuve de traitement. Selon un mode d'exécution particulier, le connecteur tournant est agencé à une deuxième extrémité de la série de cuves.

Si la machine selon l'invention utilise des supports pour porter les pièces à traiter, par exemple des supports sous forme de cassettes, lesdites structures rotatives portent des dispositifs de retenue aptes à retenir temporairement ces supports, pendant les mouvements de rotation des dites structures rotatives, et aptes à permettre un mouvement de transfert de supports entre deux mouvements de rotation, les dimensions desdits supports étant adaptées aux dits dispositifs de retenue, les dits supports portant quant à eux des moyens de fixation adaptés à retenir et à fixer lesdites pièces sur les dits supports pendant l'ensemble du dit traitement de surfaces.

Selon un mode de réalisation préféré, les dits dispositifs de retenue comprennent des glissières parallèles aux axes des dites structures rotatives, et chaque glissière d'une cuve est alignée avec une glissière située respectivement immédiatement en amont et/ou en aval, de façon à permettre le transfert des dits supports au sein d'une cuve et d'une cuve à la suivante sous l'action de moyens de transfert par glissement le long desdites glissières.

Selon un mode de réalisation, une partie au moins desdites glissières portent des dispositifs de contact élastique permettant la retenue des dits supports en une position prédéterminée sur les glissières pendant les mouvements de rotation ainsi que le glissement des supports sous l'action d'un moyen de transfert.

La machine selon l'invention comprend un dispositif de transfert agencé au-dessus des cuves, synchronisé avec le dispositif d'entraînement de l'axe de la machine, comprenant des organes de préhension des supports se trouvant en position haute sur lesdites structures rotatives, le dit dispositif de transfert effectuant un mouvement de transfert simultané des dits supports en position haute, chaque support en position haute prenant, sous l'effet du dit mouvement de transfert, l'emplacement qu'occupait, avant le dit mouvement de transfert, le support en position haute immédiatement en aval.

Selon un mode de réalisation, lesdits organes de préhension comprennent un arbre pivotant s'étendant au-dessus de la série de cuves et un ensemble de bras montés sur le dit arbre, chaque bras portant à son extrémité libre 2 pions distants et perpendiculaires au bras, la distance entre les deux pions d'un même bras correspondant à la distance séparant 2 supports successifs en position haute et la distance entre deux bras correspondant à la longueur d'un support. De préférence les bras sont ajustables en longueur et les pions sont ajustables en hauteur.

De préférence, le dispositif de transfert comprend des moyens de déplacement alterné amont- aval des dits organes de préhension, dont un mode de réalisation particulier comprend un ensemble constitué d'un pignon et d'une crémaillère, le pignon étant solidaire d'un châssis et d'une glissière et engrenant avec ladite crémaillère solidaire d'un coulisseau, la course des dits moyens de déplacement alterné étant égale à la distance entre deux emplacements successifs de supports en position haute.

Le dispositif de transfert comprend également des moyens de dégagement des dits organes de préhension, qui, selon un mode de réalisation, comprennent un ensemble bielle-manivelle motorisé agissant sur l'arbre pivotant, engageant et dégageant simultanément lesdits organes de préhension de tous les supports en position haute.

L'invention a en particulier pour objet une machine telle que définie ci-dessus, destinée à l'anodisation de pièces en aluminium, comprenant d'amont en aval
- une cuve d'oxydation destinée à contenir un liquide de traitement électrolytique, par exemple de l'acide sulfurique, ladite cuve d'oxydation comprenant une ou plusieurs électrodes servant de cathode(s), en particulier 2 cathodes disposées de part et d'autre de la structure rotative de la cuve de traitement, la dite structure rotative servant d'anode,
- une cuve de rinçage destinée à contenir un liquide de rinçage, par exemple de l'eau,
- une cuve d'étuvage et de séchage, alimentée en air chaud.

Dans cette machine d'anodisation, la cuve de rinçage peut être compartimentée entre sa partie amont et sa partie aval par une ou plusieurs cloisons de séparation transversales, traversées par l'axe de rotation de ladite cuve de rinçage, le dit axe de rotation portant une structure rotative dans chaque compartiment, le compartiment aval comprenant une entrée pour l'alimentation en liquide de rinçage frais, le compartiment amont comprenant une sortie de liquide de rinçage usagé et les cloisons de séparation présentant un passage pour le liquide de rinçage. Les dits passages peuvent prendre la forme d'ouvertures de trop-plein agencées dans les parties supérieures des cloisons transversales.

Dans l'installation selon l'invention, le bas du caisson constitue un bac de rétention de liquides. La capacité du bac de rétention peut-être choisie de telle sorte qu'il puisse accueillir la totalité du volume de liquides présents dans la machine.

De préférence le caisson contient un réservoir de liquide de traitement, un réservoir de liquide de traitement usagé, un réservoir de liquide de rinçage et un réservoir de liquide de rinçage usagé.

De préférence, un dispositif pour le retraitement des liquides de traitement et de rinçage usagés est logé à l'intérieur du caisson. Selon un mode de réalisation, le dispositif pour le retraitement des liquides usagés est un évaporateur retraitant lesdits liquides usagés par distillation et condensation.

De préférence, le caisson contient une station de lavage des gaz, en particulier une station de lavage de gaz branchée sur un circuit d'eau, implantée au-dessus des dégagements des cuves.

D'autres caractéristiques et avantages de l'invention se dégageront pour l'homme du métier de la description ci-dessous d'un mode d'exécution, qui n'est donnée qu'à titre d'exemple non limitatif, en regard des dessins annexés, dans lesquels:
- La figure 1 est une vue extérieure d'ensemble, en perspective, d'une installation selon l'invention;
- La figure 2 est une vue en perspective de l'installation de la figure 1, sans chaîne de convoyage et sans les parois extérieures de cette installation;
- La figure 3 est une vue en perspective de la série de cuves d'une machine selon l'invention, avec leurs structures rotatives;
- La figure 4 est une vue en perspective de la structure rotative de la cuve de traitement électrolytique de la figure 3;
- La figure 5 est une vue en perspective, du dispositif de transfert de la machine de la figure 2;
- La figure 6 est une vue agrandie, en perspective, montrant l'extrémité amont de la structure rotative de la cuve de traitement de la figure 3 et son connecteur électrique;
- La figure 7 est une vue agrandie, en perspective, montrant l'extrémité aval de la structure rotative de la cuve d'étuvage et le moteur d'entraînement de l'axe.

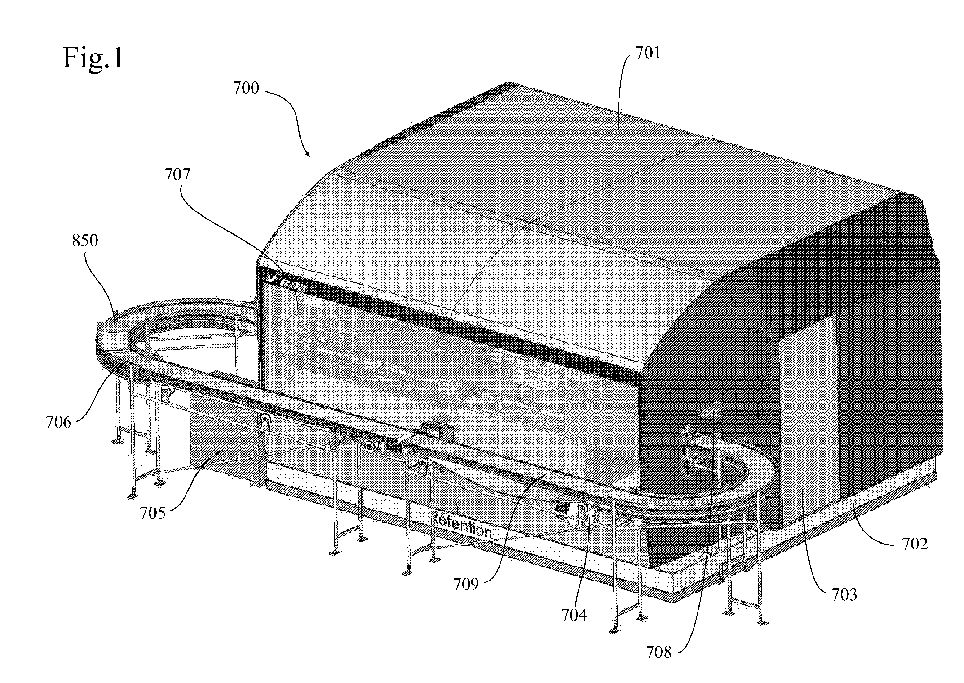

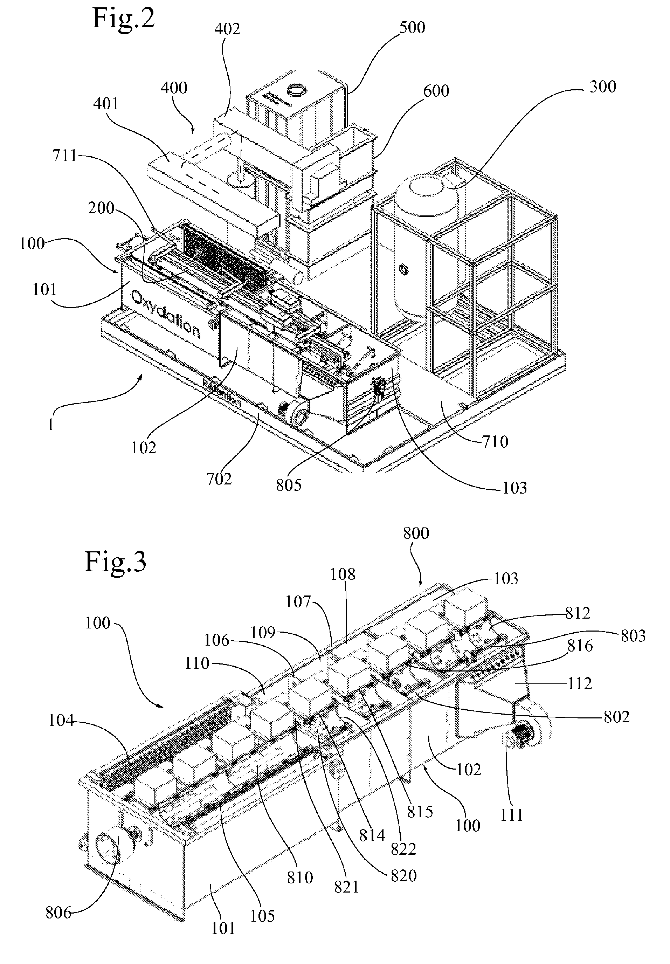

Les figures 1 et 2 illustrent une installation de traitement de surface de pièces métalliques selon l'invention, en l'espèce une anodisation de pièces en aluminium, qui nécessite la mise en oeuvre successivement d'une solution électrolytique et d'un liquide de rinçage.

La figure 1 est une vue en perspective montrant l'extérieur de l'installation 700. Toutes les parties mettant en oeuvre des fluides sont agencées à l'intérieur d'un caisson 701 posé sur un bac de rétention 702. Une porte 703, sur la partie droite de la figure 1, donne accès à l'intérieur du caisson 701. Sur la face avant du caisson 701 se trouve une prise d'air 704 d'une turbine. A l'extérieur du caisson, sur le côté gauche de la figure 1, est disposé un bloc redresseur 705 destiné à l'alimentation en courant continu de la machine située à l'intérieur du caisson 701. Les pièces brutes, à anodiser, préalablement fixées sur des supports-cassettes (opération non montrée sur les figures), sont placées sur la bande de convoyage de gauche 706, qui les amène à l'entrée du caisson via une ouverture 707 dont les dimensions sont réduites dans la mesure du possible pour réduire les émanations. À la sortie du caisson, les supports-cassettes chargés de pièces anodisées sont repris, via une ouverture similaire 708, par la bande de convoyage 709 à droite de la figure 1, et déchargés pour être amenés vers une utilisation en aval. Ce type de bande de convoyage est en soi connu de l'homme du métier. Les supports-cassettes 850,851 chargés de pièces sont illustrés dans l'ensemble des figures simplement par des parallélépipèdes rectangles montrant leur encombrement extérieur. Des exemples de tels supports-cassettes sont décrits en détail dans le brevet EP 1 433 537 du déposant, dont le contenu est incorporé ici par référence.

La figure 2 est une vue en perspective de l'intérieur du caisson 701 de la figure 1, montrant une passerelle d'accès 710 et le bac de rétention 702, au-dessus duquel sont agencés des réservoirs de liquides 500,600, un ensemble de dispositifs de traitement de fluides 300,400, qui seront décrits plus loin, et une machine de traitement de surface 1 selon l'invention.

La machine de traitement 1 comprend un ensemble 100 de cuves, un ensemble de structures rotatives 800 et un dispositif de transfert 200. Comme le montrent les figures 2 et 3, les cuves 100 sont agencées en série et contiguës. Au-dessus de l'ensemble 100 formé par les cuves est agencé un dispositif de transfert 200, qui sera décrit plus loin. Le dispositif de transfert est suspendu par trois traverses 711 à une armature (non montrée sur la figure 2, par souci de clarté) du caisson 701.

La figure 3 est une vue en perspective des trois cuves 101,102,103 constituant la série de cuves 100 de la figure 2, montrant l'agencement des structures rotatives, chargées en supports-cassettes, dans les cuves. L'ensemble formé par les trois cuves comprend, d'amont en aval, et de gauche à droite sur les figures 2 et 3:
- une cuve de traitement 101 électrolytique, dans laquelle sont agencées latéralement, de part et d'autre, 2 plaques métalliques 104,105 formant deux électrodes, et constituant en l'espèce la cathode;
- une cuve de rinçage 102, compartimentée entre sa partie amont et sa partie aval par 2 cloisons de séparation transversales 106, 107, le compartiment aval 108 comportant une entrée pour l'alimentation en liquide de rinçage frais, le compartiment amont 110 comportant une sortie de liquide de rinçage usagé et les cloisons de séparation présentant dans leur partie supérieure des ouvertures de trop-plein;
- une cuve d'étuvage 103 et de séchage, alimentée en air chaud par une turbine 111 via une gaine 112.

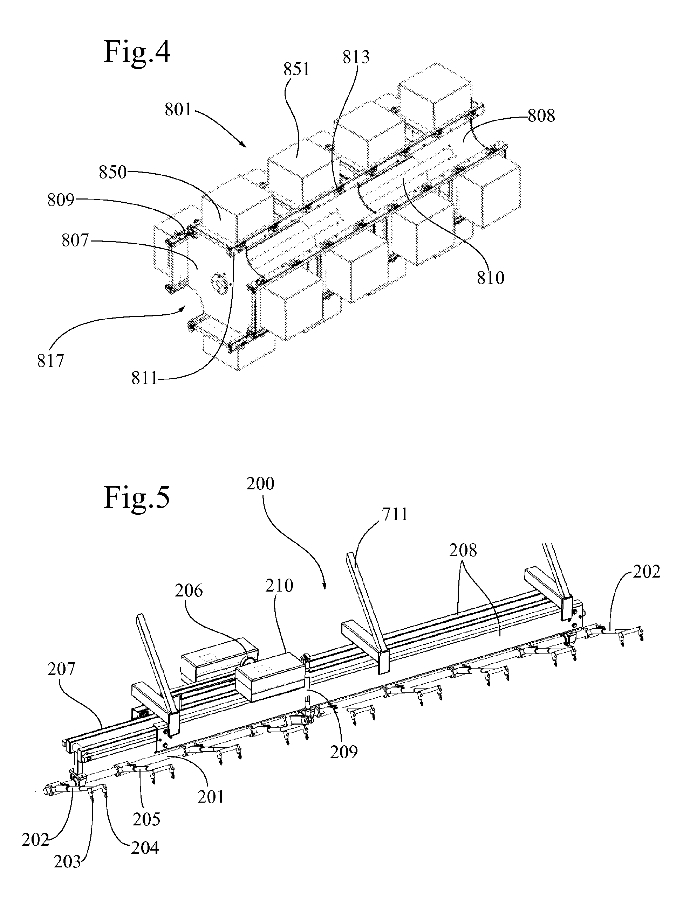

La figure 4 est une vue agrandie de la structure rotative 801 de la cuve de traitement électrolytique 101. La structure rotative 801 comprend un axe 810 monté horizontalement en rotation, suspendu entre des paliers disposés dans la paroi amont et la paroi aval de la cuve correspondante. Les axes 810,820,830 des trois cuves 101,102,103 sont alignés entre eux et solidarisés à leurs extrémités de façon à former ensemble un axe commun 840 unique, traversant toute la machine, tout en étant formé des trois segments d'axe 810,820,830. Sur la paroi terminale aval de la cuve d'étuvage 103 est fixé un moteur électrique 805 entraînant par entraînement direct l'ensemble de l'axe 840, et donc des structures rotatives des cuves 101,102,103.

Le segment d'axe 810 de la cuve de traitement électrolytique 101 est relié au segment d'axe 820 de la cuve de rinçage 102 par l'intermédiaire d'une pièce en matériau électriquement isolant. À son autre extrémité, qui dépasse de la paroi amont de la cuve de traitement électrolytique, ce segment d'axe 810 porte un connecteur tournant 804 comprenant trois rouleaux qui tournent à l'intérieur et au contact d'un cylindre de contact 806, lequel est relié au bloc redresseur 705, qui constitue l'alimentation de courant continu.

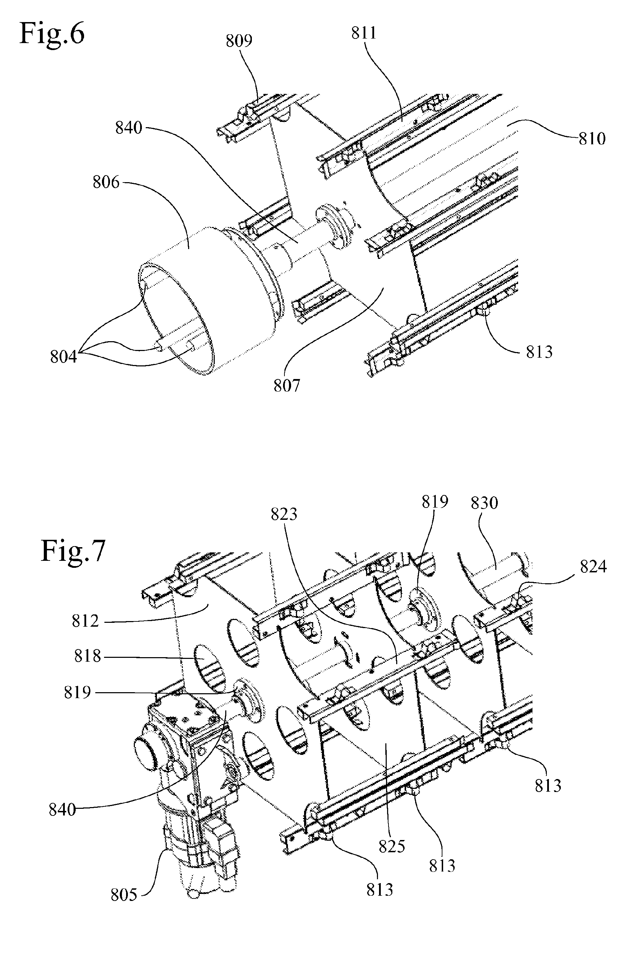

Comme le montrent les figures 3, 4, 6 et 7, chaque structure rotative comprend plusieurs plaques transversales 807,808,812 de contour substantiellement polygonal, montées perpendiculairement sur les segments d'axe 810,820,830 correspondants et rendues solidaires en rotation, comme montré par exemple en 819, de l'ensemble de l'axe 840. Sur la périphérie de ces plaques transversales sont montées des paires de glissières longitudinales 809,811, parallèles à l'axe de rotation, dont les dimensions et les écartements sont adaptés à accueillir des supports-cassettes 850,851 tels que ceux mentionnés plus haut. Dans le mode d'exécution illustré dans les figures 3, 4, 6 et 7 les plaques transversales 807,808,812 portent quatre paires de glissières 809,811, agencées à 90° les unes par rapport aux autres. Les plaques transversales 807,808,812 peuvent présenter des découpes 817,818 pour alléger le poids de l'ensemble d'une structure rotative et, dans le cas de la plaque 812 de la cuve d'étuvage 103, pour faciliter le passage des flux d'air. Comme le montre la figure 3, chaque glissière de la cuve de traitement électrolytique 101 est alignée avec une glissière des cuves situées en aval, de façon à permettre le transfert des supports-cassettes d'une cuve à la suivante par glissement le long desdites glissières. L'alignement des positions des glissières est effectué au montage de la machine, lors de la solidarisation des segments d'axes, ce qui élimine d'emblée les problèmes ultérieurs de synchronisation.

Dans la cuve de traitement électrolytique 101 montrée sur la figure 3, les glissières 809,811 sont continues d'amont en aval de la cuve. Par contre dans la cuve de rinçage 102, les glissières sont segmentées en trois segments 814,815,816 peu distants et alignés, chacun des segments de glissières étant fixé sur une paire de plaques transversales 821,822, les trois sous-structures rotatives ainsi constituées étant séparées les unes des autres par les 2 cloisons de séparation 106,107 de la cuve de rinçage 102.

Dans la cuve d'étuvage illustrée par la figure 3, les glissières 823,824 sont également segmentées en 2 segments, chacun des segments étant fixé sur une paire de plaques transversales 812, 825; les 2 sous-structures rotatives ainsi constituées ne sont pas séparées l'une de l'autre par un moyen de cloisonnement dans cette cuve.

Les glissières portent des plots de contact 813 élastiques dont les positions et les espacements correspondent à la longueur des supports-cassettes 850,851 et aux compartiments 108,109,110 de la cuve de rinçage 102, permettant ainsi de retenir en une position longitudinale prédéterminée sur les glissières les dits supports-cassettes pendant les mouvements de rotation tout en permettant le glissement des supports-cassettes sous l'action du dispositif de transfert entre deux mouvements de rotation.

La machine selon l'invention comprend un dispositif de transfert 200, dont l'emplacement, au-dessus de la série de cuves 100, est montré par la figure 2 et les éléments constitutifs sont montrés par la figure 5, synchronisé avec le dispositif d'entraînement 805 de l'axe de la machine. Il comprend un ensemble d'organes de préhension des supports-cassettes se trouvant momentanément en position haute sur lesdites structures rotatives. Le dispositif de transfert effectue un mouvement de transfert simultané de tous les supports-cassettes 850,851 en position haute, chaque support 850 en position haute prenant, sous l'effet du dit mouvement de transfert, l'emplacement qu'occupait, avant le dit mouvement de transfert, le support 851 en position haute immédiatement en aval.

Comme le montre la figure 5, les organes de préhension des supports-cassettes comprennent un arbre horizontal 201 s'étendant longitudinalement au-dessus de la série de cuves 100 et un ensemble de bras 202,205 montés perpendiculairement sur le dit arbre 201, chaque bras portant à son extrémité libre 2 pions coniques 203,204 orientés perpendiculairement au bras, la distance entre les deux pions 203,204 d'un même bras 202 correspondant à la distance séparant 2 supports-cassettes successifs en position haute et la distance entre deux bras voisins 202,205 correspondant à la longueur d'un support-cassette. Les bras 202,205 sont ajustables en longueur et en position sur l'arbre 201 et les pions 203,204 sont ajustables en hauteur. Ainsi, le dispositif de transfert peut être positionné et ajusté de façon à saisir chaque support-cassette 850,851 simultanément à l'avant et à l'arrière de ce dernier, en compensant d'éventuels défauts de géométrie des structures rotatives, de sorte à augmenter la fiabilité du système de transfert.

Comme le montre la figure 5, le dispositif de transfert 200 comprend des moyens de déplacement horizontal alterné, amont-aval de l'arbre 201 et par conséquent de l'ensemble des dits organes de préhension, sous forme d'un ensemble constitué d'un pignon moteur et d'une crémaillère. Le pignon 206 est solidaire d'un châssis et d'une glissière 208 fixée par les traverses 711 à l'armature portant le dispositif, et engrène avec ladite crémaillère solidaire d'un coulisseau 207, le coulisseau 207 étant solidaire de l'arbre 201, la course des dits moyens de déplacement alterné étant égale à la distance entre deux emplacements successifs de supports-cassettes en position haute.

Le dispositif de transfert 200 comprend également un système de dégagement des dits organes de préhension, comprenant un moteur d'entraînement 210 entraînant un ensemble unique bielle-manivelle 209, ce dernier entraînant le pivotement alterné de l'arbre 201, et donc des bras 202,205, engageant et dégageant simultanément les pions 203,204 de tous les supports-cassettes en position haute, de façon à libérer simultanément tous ces supports cassettes en position haute, et à permettre à la structure rotative 800 de tourner. Les bras 202 pivotent entre une position abaissée, proche de l'horizontale, et une position relevée. L'arbre 201, le coulisseau 207 et la glissières 208 sont donc parallèles aux glissières mais latéralement décalées par rapport aux paires de glissières en position haute. Lorsque le système de préhension est en position relevée, le dispositif de transfert effectue une translation vers l'amont de l'arbre 201 grâce au système pignon-crémaillère et se repositionne pour le mouvement de transfert suivant.

Dans le cadre d'un procédé d'anodisation au moyen de la machine de traitement 1 décrite ci-dessus, la cuve de traitement électrolytique 101 est remplie par exemple d'une solution d'acide sulfurique, et permet de réaliser l'anodisation de pièces en aluminium fixées sur des supports-cassettes. Pour ce type de traitement la cuve 101 contient deux plaques métalliques constituant la cathode, agencées à proximité de ses parois latérales, de part et d'autre de la structure rotative 801, celle-ci étant alimentée en courant électrique de polarité opposée à celle des électrodes, ledit courant électrique étant transmis aux pièces à traiter par l'intermédiaire successivement de l'axe 810, des plaques transversales 807,808, des glissières 809,811 et des supports-cassettes 850. Selon le procédé mettant en oeuvre l'installation de traitement de l'invention, on immerge chaque pièce dans la cuve 101, en lui faisant faire, dans le mode de réalisation illustré par les figures, quatre rotations complètes, de telle sorte que les bulles d'air et poches d'air susceptibles d'être créées à l'intérieur de la cuve au contact des pièces sont chassées, permettant ainsi au liquide de traitement de traiter l'intégralité de la surface des pièces, rendant le traitement parfaitement homogène.

Ainsi les supports-cassettes portant les pièces non encore traitées, amenés par la chaîne de convoyage 706, sont engagées par déplacement horizontal dans l'extrémité amont de la paire de glissières non immergée, placée momentanément au sommet de la structure rotative 801, chaque support-cassette étant positionné longitudinalement sur la paire de glissières supérieures grâce au dispositif de transfert 200 coopérant avec les dispositifs de contact élastique 813 de la paire de glissières. L'ensemble de la machine de traitement illustrée dans les figures 2-5 fonctionne par séquences de mouvements cadencés et synchrones. Selon le mode de réalisation illustré, la structure rotative 801 comprend, à sa périphérie externe 4 paires de glissières 809,811 orientées à 90° l'une de l'autre, destinées à recevoir les supports-cassettes 850,851 maintenant les pièces à traiter. Après chaque rotation de 90°, l'ensemble des supports-cassettes 850,851 disposés momentanément en position émergée haute subit une translation longitudinale dont la longueur correspond à la distance entre deux supports-cassettes voisins, tandis que les autres supports-cassettes, immergés, ne se déplacent pas sur leur glissières. Comme l'illustrent les figures 3 et 4, on fait ainsi faire une rotation complète de 360°, composée de quatre quarts de tour, à chaque support-cassette entre deux translations, ledit support-cassette étant immergé pendant presque quatre rotations complètes dans le liquide contenu dans la cuve de traitement électrolytique 101, à l'exception de la portion supérieure de chaque rotation, où le support cassette se trouve momentanément hors du liquide afin de permettre la mise en place, l'avancement, le transfert et le retrait des pièces.

A chacune des séquences, c'est-à-dire après chaque rotation de 90°, un support-cassette de pièces traitées par électrolyse est transféré de la cuve de traitement électrolytique 101 sur la structure rotative 802 du premier compartiment 110 de la cuve de rinçage 102, puis est immergé dans le liquide de rinçage lors de la rotation suivante, pour faire un tour complet. Il passe ensuite dans le deuxième compartiment 109, y fait une rotation de 360°, puis passe dans le troisième compartiment 108, y exécute une dernière rotation de 360° avant de passer dans la cuve d'étuvage 103. La cuve de rinçage est alimentée continûment en liquide de rinçage. Ce liquide de rinçage pénètre d'abord dans le troisième compartiment 108 de la cuve de rinçage, puis passe dans le deuxième compartiment 109 par l'ouverture de la paroi de séparation 107 entre ces 2 compartiments, puis dans le premier compartiment 110, avant d'être évacué vers une cuve de stockage de liquide usagé. L'homme du métier aura compris que grâce à cet agencement, l'opération de rinçage s'effectue en quelque sorte, et en empruntant une terminologie du domaine des séparations chimiques, comme un "lavage à contre courant".

Dans la troisième cuve 103, qui contient une structure rotative 803 d'une longueur équivalente à deux positions de supports-cassettes, ceux-ci font deux tours complets avant d'être dégagés par le dispositif de transfert 200 vers la chaîne de convoyage 709 en aval de l'installation. Cette cuve d'étuvage ne contient pas de liquide mais est traversée par un courant d'air chaud fourni par la turbine 111,112. Grâce à la rotation des pièces dans la cuve 103 par rapport à la direction du flux d'air, rotation qui n'a pas lieu dans un tunnel de séchage classique, les gouttelettes de liquide de rinçage sont chassées efficacement des parois, même dans le cas de pièces présentant des cavités et des parties creuses.

L'air chargé d'humidité issu de la cuve de séchage 103 est capté et combiné avec l'air chargé de buées aspiré par la hotte 401 disposée au-dessus de la cuve d'oxydation 101 et de la cuve de rinçage 102, et traité par un bloc ventilo-laveur de gaz 402 installé à l'intérieur du caisson 701. Ce type d'appareil est en soi connu de l'homme du métier des traitements de surface. L'air sortant de cette station 400 de captage et de lavage de gaz peut-être rejeté sans restriction dans l'atmosphère.

L'eau sortant du laveur de gaz est stockée dans un récipient de stockage intermédiaire. Cette eau est combinée avec l'eau de rinçage usagée et retraitée dans l'évaporateur 300 qui constitue une petite unité de distillation-condensation. Le distillat est recyclé comme liquide de rinçage. Le condensat qui est composé d'une solution d'électrolyte acide passe par une cuve de stockage intermédiaire puis est combiné avec de l'électrolyte frais. L'électrolytique usagé est également stocké dans un récipient de stockage intermédiaire puis retraité dans l'évaporateur, le distillat étant combiné avec de l'électrolyte frais et le résidu de distillation, dont le volume est faible, stocké en vue d'un retraitement extérieur. Dans son ensemble, l'installation selon l'invention ne produit qu'un faible volume de rejets non traitable in situ, ce qui permet son utilisation dans une usine ne disposant pas des installations d'une usine de traitements de surface électrochimiques

Chaque cassette-support traversant la machine selon l'invention effectue un parcours que l'on peut globalement qualifier d'hélicoïdal, bien qu'il soit en fait constitué d'une succession de rotations et de translations. Par ailleurs le parcours de chaque support-cassette est constitué de séquences cadencées de ces mouvements, mais le processus d'ensemble du traitement d'un grand nombre de supports-cassettes est à considérer comme un processus continu. Il est par conséquent possible d'ajuster les débits des alimentations en fluides, liquide de traitement, liquide de rinçage et flux d'air de façon à opérer en régime continu établi, les volumes et concentrations des fluides dans l'ensemble de la série de cuves 100 restants constants: Par conséquent, la qualité des pièces traitées reste parfaitement constante. Par ailleurs, la qualité de l'air rejeté par l'installation de lavage de gaz reste parfaitement constante. Les retraitements des effluents liquides à l'intérieur du caisson peuvent être effectués soit en continu, soit par batch, grâce aux récipients 500,600 permettant un stockage intermédiaire.

Bien entendu, l'invention n'est pas limitée au mode de réalisation décrit et représenté à titre d'exemple ci-dessus, mais elle comprend de nombreuses variantes techniques ainsi que leurs combinaisons :
- Ainsi, la figure 4 illustre une structure rotative avec 4 positions de fixation de cassettes. Ce nombre pourrait être différent. Avec par exemple seulement 2 positions de fixations, chaque plaque transversale peut être remplacée par deux bras.
- Les supports-cassettes mentionnés ci-dessus conviennent particulièrement au traitement de séries de pièces de petite dimension. Dans le cas d'une unité de traitement de pièces de dimensions importantes mais invariables, celles-ci peuvent être fixées directement sur la structure rotative, et par d'autres moyens de fixation que des glissières.
- Les axes des structures rotatives de deux cuves successives peuvent être reliés par des engrenages qui les solidarisent en rotation sans être nécessairement alignés.
- L'ensemble de cuves 100 peut comprendre plusieurs cuves construites séparément puis installées en série. Il peut également être réalisé au moyen d'une cuve de grande longueur subdivisée par des cloisons en une pluralité compartiments aux fonctions différentes.

## Revendications

1. Machine de traitement de surfaces de pièces métalliques par immersion desdites pièces dans au moins un liquide de traitement contenu dans une cuve de traitement, ladite machine (1) comprenant une pluralité de cuves (101,102,103) agencées en série (100) et un dispositif de transfert (200) de pièces entre lesdites cuves, lesdites cuves comprenant chacune une structure rotative (801,802,803) montée sur un axe de rotation (810,820,830) et pouvant accueillir lesdites pièces, lesdites pièces étant immergées dans le dit liquide de traitement par un mouvement de rotation de la structure rotative (801) de la cuve de traitement (101) choisi de telle sorte que les bulles d'air susceptibles d'être créées par l'immersion des dites pièces sont chassées des surfaces desdites pièces, **caractérisée en ce que** lesdits axes de rotation des dites structures rotatives de la série (100) de cuves sont solidaires en rotation et entraînés par un dispositif d'entraînement (805) commun.

2. Machine selon la revendication 1, **caractérisée en ce que** lesdites cuves agencées en série sont contiguës et que lesdits axes de rotation des dites structures rotatives de ladite série de cuves sont alignés et assemblés de façon à former un axe de rotation commun (840) traversant l'ensemble de ladite machine.

3. Machine selon la revendication 1 ou 2, **caractérisée en ce que** le dit dispositif d'entraînement commun comprend un moteur électrique (805) réalisant un entraînement direct desdits axes de rotation, en particulier un moteur électrique (805) agencé à une première extrémité de ladite série de cuves.

4. Machine selon l'une des revendications précédentes, **caractérisée en ce que** l'axe de rotation (810) de ladite cuve de traitement est isolé électriquement des autres parties d'axe (820,830), **en ce que** la structure rotative (801) de ladite cuve de traitement est connectée à un générateur électrique (705) par l'intermédiaire de l'axe de rotation (810) de ladite cuve de traitement, en particulier au moyen d'un connecteur tournant (804,806) agencé à une deuxième extrémité de ladite série de cuves.

5. Machine selon l'une des revendications précédentes, **caractérisée en ce que** lesdites structures rotatives portent des dispositifs de retenue (809,811,813,814,815,816,823,824) aptes à retenir temporairement des supports (850,851) de pièces de dimensions adaptées aux dits dispositifs de retenue pendant les mouvements de rotation des dites structures rotatives, et aptes à permettre un mouvement de transfert de supports (850,851) entre deux mouvements de rotation,sous l'action dudit dispositif de transfert, les dits supports portant des moyens de fixation adaptés à retenir lesdites pièces métalliques pendant ledit traitement de surfaces.

6. Machine selon la revendication 5, **caractérisée en ce que** les dits dispositifs de retenue comprennent des glissières (809,811,814,815,816,823,824) parallèles aux dits axes de rotation des dites structures rotatives, chacune desdites glissières d'une cuve étant alignée avec une glissière des cuves respectivement situées en amont et en aval, de façon à permettre le transfert des dits supports d'une cuve à la suivante sous l'action dudit dispositif de transfert par glissement le long desdites glissières, et **en ce qu'**une partie au moins desdites glissières porte des dispositifs de contact élastique (813) permettant la retenue des dits supports en une position prédéterminée sur lesdites glissières pendant lesdits mouvements de rotation et le glissement des supports sous l'action du dispositif de transfert.

7. Machine selon l'une des revendications 5-6, **caractérisée en ce qu'**elle comprend un dispositif de transfert (200) agencé au-dessus desdites cuves, synchronisé avec le dispositif d'entraînement (805) de la machine, comprenant des organes de préhension (201,202,203,204,205) des supports (850,851) se trouvant momentanément en position haute sur lesdites structures rotatives, des moyens pour dégager (209,210) lesdits organes de préhension desdits supports en position haute et des moyens de déplacement alterné amont-aval (206,207,208) desdits organes de préhension, la course des dits moyens de déplacement alterné étant égale à la distance entre deux emplacements successifs de supports en position haute, ledit dispositif de transfert réalisant un mouvement de transfert simultané desdits supports en position haute, chaque support en position haute prenant, sous l'effet du dit mouvement de transfert, l'emplacement qu'occupait, avant le dit mouvement de transfert, le support en position haute immédiatement en aval.

8. Machine selon la revendication 7, **caractérisée en ce que** lesdits organes de préhension comprennent un arbre (201) s'étendant au-dessus de ladite série de cuves et un ensemble de bras (202,205) montés sur le dit arbre, chaque bras portant à son extrémité libre deux pions (203,204) distants et perpendiculaires audit bras, la distance entre les deux pions(203,204) d'un même bras(202) correspondant à la distance séparant deux supports successifs (850,851) en position haute et la distance entre deux bras (202,205) correspondant à la longueur d'un dit support, que ledit dispositif de transfert comprend un ensemble constitué d'un pignon moteur (206)et d'une crémaillère, ledit pignon étant solidaire d'un châssis et d'une glissière (208)et engrenant avec ladite crémaillère solidaire d'un coulisseau (207), ledit coulisseau portant ledit arbre, et un ensemble bielle-manivelle (209) motorisé actionnant le dit arbre pour dégager simultanément lesdits organes de préhension de tous les supports en position haute.

9. Machine selon l'une des revendications précédentes, destinée à l'anodisation de pièces métalliques, comprenant d'amont en aval
- une cuve de traitement d'oxydation (101) destinée à contenir un liquide de traitement électrolytique, ladite cuve d'oxydation comprenant une ou plusieurs électrodes (104,105) servant de cathode(s), en particulier deux cathodes disposées de part et d'autre de la structure rotative(801) de la cuve de traitement (101), la dite structure rotative servant d'anode,
- une cuve de rinçage (102) destinée à contenir un liquide de rinçage,
- une cuve d'étuvage (103) destinée à être alimentée en air chaud.

10. Machine selon la revendication 9, **caractérisée en ce que** ladite cuve de rinçage est compartimentée entre sa partie amont et sa partie aval par au moins une cloison de séparation transversale (106,107), traversée par l'axe de rotation (820) de ladite cuve de rinçage, le dit axe de rotation portant une structure rotative (814,821,822) dans chaque compartiment (108,109,110), le compartiment aval (108) comprenant une entrée pour l'alimentation en liquide de rinçage frais, le compartiment amont (110) comprenant une sortie de liquide de rinçage usagé et ladite cloison de séparation présentant une ouverture permettant le passage du liquide de rinçage d'aval en amont.

11. Installation de traitement de surfaces de pièces métalliques, **caractérisée en ce qu'**elle comprend une machine (1) selon l'une des revendications précédentes, logée dans un caisson (701) comprenant des moyens de confinement (702) et de retraitement (300,400) des fluides émanant de ladite machine.

12. Installation selon la revendication 11, **caractérisée en ce que** le bas dudit caisson constitue un bac de rétention (702) de liquides, en particulier **en ce que** la capacité dudit bac de rétention est choisie de telle sorte qu'il puisse accueillir la totalité du volume de liquides présents dans ladite machine.

13. Installation selon la revendication 11 ou 12, **caractérisée en ce que** ledit caisson contient un réservoir de liquide de traitement (500), un réservoir de liquide de traitement usagé et un réservoir de liquide de rinçage usagé (600).

14. Installation selon la revendication 13, **caractérisée en ce qu'**un dispositif pour le retraitement des liquides de traitement et de rinçage usagés est logé à l'intérieur du caisson, et en particulier que le dispositif pour le retraitement des liquides usagés est un évaporateur (300) retraitant lesdits liquides usagés par distillation et condensation.

15. Installation selon l'une des revendications 11-14, **caractérisée en ce** le caisson contient une station de lavage des gaz (400) implantée au-dessus des dégagements des cuves, en particulier une station de lavage de gaz branchée sur un circuit d'eau.
